(19) Europäisches Patentamt
European Patent Office
Office européen des brevets

(11) **EP 1 741 059 B1**

(12) **EUROPÄISCHE PATENTSCHRIFT**

(45) Veröffentlichungstag und Bekanntmachung des Hinweises auf die Patenterteilung:
**02.10.2013 Patentblatt 2013/40**

(51) Int Cl.:
*G06T 7/00* (2006.01)

(21) Anmeldenummer: 05701468.0

(22) Anmeldetag: **10.01.2005**

(86) Internationale Anmeldenummer:
**PCT/EP2005/050072**

(87) Internationale Veröffentlichungsnummer:
**WO 2005/104033 (03.11.2005 Gazette 2005/44)**

(54) **VERFAHREN ZUR BESTIMMUNG EINER POSITION EINES MARKERS IN EINEM AUGMENTED-REALITY-SYSTEM**

METHOD FOR DETERMINING THE POSITION OF A MARKER IN AN AUGMENTED REALITY SYSTEM

PROCÉDÉ POUR DÉTERMINER LA POSITION D'UN MARQUEUR DANS UN SYSTÈME DE RÉALITÉ AUGMENTÉE

(84) Benannte Vertragsstaaten:
**DE FR GB IT**

(30) Priorität: **26.04.2004 EP 04009877**

(43) Veröffentlichungstag der Anmeldung:
**10.01.2007 Patentblatt 2007/02**

(73) Patentinhaber: **Siemens Aktiengesellschaft 80333 München (DE)**

(72) Erfinder: **ST JOHN, Ben 81735 München (DE)**

(56) Entgegenhaltungen:
**US-A1- 2002 094 189**

- **REKIMOTO J: "Matrix: a realtime object identification and registration method for augmented reality" COMPUTER HUMAN INTERACTION, 1998. PROCEEDINGS. 3RD ASIA PACIFIC SHONAN VILLAGE CENTER, JAPAN 15-17 JULY 1998, LOS ALAMITOS, CA, USA,IEEE COMPUT. SOC, US, 15. Juli 1998 (1998-07-15), Seiten 63-68, XP010295091 ISBN: 0-8186-8347-3 in der Anmeldung erwähnt**
- **KATO H ET AL: "Marker tracking and HMD calibration for a video-based augmented reality conferencing system" AUGMENTED REALITY, 1999. (IWAR '99). PROCEEDINGS. 2ND IEEE AND ACM INTERNATIONAL WORKSHOP ON SAN FRANCISCO, CA, USA 20-21 OCT. 1999, LOS ALAMITOS, CA, USA,IEEE COMPUT. SOC, US, 20. Oktober 1999 (1999-10-20), Seiten 85-94, XP010358756 ISBN: 0-7695-0359-4**

**Beschreibung**

Die vorliegende Erfindung bezieht sich auf ein Verfahren zur Bestimmung einer Position, d.h. eines Abstands und einer Orientierung, eines Markers in einer "erweiterten Realität" bzw. einem sogenannten Augmented-Reality-System und insbesondere auf ein Verfahren zur Bestimmung einer Position eines Markers, welches für mobile Endgeräte wie beispielsweise Handys oder PDAs verwendet werden kann.

Augmented Reality bzw. "erweiterte Realität" stellt ein neues Gebiet der Technik dar, bei dem beispielsweise einer aktuellen optischen Wahrnehmung der realen Umgebung gleichzeitig zusätzliche visuelle Informationen überlagert werden. Dabei unterschiedet man grundsätzlich zwischen der sogenannten "see- through"- Technik, bei der ein Anwender z.B. durch eine durchlässige Anzeigeeinheit in die reale Umgebung blickt, und die sogenannte "feed- through"-Technik, bei der die reale Umgebung durch eine Aufnahmeeinheit wie beispielsweise eine Kamera aufgenommen und vor der Wiedergabe an einer Anzeigeeinheit mit einem computergenerierten virtuellen Bild gemischt wird.

Ein Anwender nimmt demzufolge im Ergebnis gleichzeitig sowohl die reale Umgebung als auch die durch beispielsweise Computergraphik erzeugten, virtuellen Bildbestandteile als kombinierte Darstellung (Summenbild) wahr. Diese Vermischung von realen und virtuellen Bildbestandteilen zur "erweiterten Realität" bzw. "Augmented Reality" ermöglicht dem Anwender, seine Aktionen unter unmittelbarem Einbezug der überlagerten und damit gleichzeitig wahrnehmbaren Zusatzinformationen auszuführen.

Damit eine "erweiterte Realität" auch während mobiler Situationen möglich wird, werden Positionsveränderungen des Anwenders (z.B. durch Drehung, Standortwechsel, Änderung der Körperhaltung und Blickrichtung) messtechnisch erfasst und in die aktuell erzeugte Bildwiedergabe einbezogen. Diese Erfassung der Positionsveränderungen kann mit einer Vielzahl von Techniken durchgeführt werden, wobei beispielsweise mechanische, magnetische, optische und akustische Sensoren bis hin zur Auswertung des sogenannten GPS (Global Positioning System) zur Erfassung einer Positionsveränderung ausgewertet werden.

Von besonderem Interesse für Systeme der erweiterten Realität innerhalb mobiler Endgeräte sind sogenannte video-basierte Techniken bzw. "Tracking-Verfahren". Hierbei werden optisch wahrnehmbare Elemente der realen Umwelt zur Bestimmung einer Positionsveränderung des Anwenders bzw. der die reale Umwelt aufnehmenden Aufnahmeeinheit benutzt. Solche Elemente werden in der Regel als "Marker" bezeichnet, die speziell für die Erfassung einer Positionsänderung angefertigt und codiert werden.

Derartige Tracking-Verfahren zur Auswertung von Markern in einer Augmented-Reality-Umgebung sind beispielsweise aus den Literaturstellen S. Malik et al.: "Robust 2D Tracking for Real Time Augmented Reality", Procedures of Vision Interface, 2002 sowie J. Rekimoto: "Matrix: Real Time Object Identification and Registration Method for Augmented Reality", Procedures of Vision Interface, July 1998 bekannt.

Ferner ist aus der Literaturstelle A. Ansar, et al.: "Linear Solutions for Visual Augmented Reality Registration", IEEE Symposium for Augmented Reality, 2001, ein Verfahren zur Objekterkennung beschrieben, das eine verringerte Störanfälligkeit durch Verwendung vorbestimmter Abschätzungs-Algorithmen ermöglicht.

Weiterhin ist aus der Literaturstelle J. Rekimoto: "Matrix: A Real Time Object Identification and Registration Method for Augmented Reality", Computer Human Interaction, IEEE Comput. Soc, 15. Juli 1998, Seiten 63- 68, ISBN: 0- 8186- 8347- 3, ein Verfahren zur Bestimmung einer Position eines Markers in einem Augmented- Reality- System bekannt, wobei markante Punkte eines Markers erfasst und daraus Marker- Vektoren ermittelt werden. Durch Analyze einer Verzerrung des rechteckförmigen Matrix- Code- Rahmens kann eine Position des Markers relativ zu einer Videokamera abgeschätzt werden.

Bei herkömmlichen Augmented-Reality-Systemen ist somit zur Erfassung der vom Anwender anvisierten Umwelt zusammen mit den Tracking-Daten eines Markers eine sehr hohe Rechnerleistung notwendig, um virtuelle Bilder möglichst in Echtzeit in die von der Aufnahmeeinheit aufgenommene Umwelt einzubringen. Diese Anforderung an die Rechnerleistung wird darüber hinaus durch die von einer Datenverarbeitungseinheit aus Datenbanken bereitzustellenden Informationen, die zur Erweiterung der realen Umwelt hinzugefügt werden sollen, und deren Visualisierung durch Erzeugung von virtuellen Bestandteilen (z.B. Computergraphiken, Animationen, Videosequenzen usw.) weiter erhöht. Erst bei entsprechender Verarbeitungsgeschwindigkeit entsteht so für den Anwender in der Anzeigeeinheit ein Summenbild aus Realbild und computergenerierten virtuellen Bildbestandteilen, das auf Grund geringer Verzögerung als erweiterte Realität wahrgenommen wird.

Ein wesentlicher Grund für die üblicherweise sehr hohe benötigte Rechnerleistung lag insbesondere in der Art und Weise der verwendeten Verfahren zur Bestimmung einer Position eines Markers in einem Augmented-Reality-System relativ zu einer Aufnahmeeinheit bzw. Kamera. Bisher wurden sogenannte "Trial and Error"-Annäherungen durchgeführt, wobei ein Referenzbild des Markers verwendet und darauf eine Transformation angewendet wird, um das transformierte Bild mit dem tatsächlich aufgenommenen Bild zu vergleichen. Dieser Vorgang wird iterativ so lange durchgeführt, bis eine ausreichend gute Übereinstimmung zwischen transformiertem Bild und aufgenommenem Bild vorliegt.

Derartige Augmented-Reality-Systeme waren demzufolge bisher nur auf Großrechner mit nahezu unbegrenzten Ressourcen und insbesondere einer sehr hohen Rechnerleistung begrenzt.

Der Erfindung liegt daher die Aufgabe zu Grunde ein Verfahren zur Bestimmung einer Position eines Markers in einem Augmented-Reality-System zu schaffen, welches sehr einfach ist, eine geringe Störanfälligkeit aufweist und somit sehr effizient ist.

Erfindungsgemäß wird diese Aufgabe durch die Maßnahmen des Patentanspruchs 1 gelöst.

Insbesondere durch das Erfassen von markanten Punkten eines Markers in einem aufgenommenen Bild, das Ermitteln von Marker-Vektoren aus den markanten Punkten des Markers, dem Ermitteln eines Abstands des Markers von einer Aufnahmeeinheit unter Verwendung der Marker-Vektoren und dem Ermitteln einer Rotationsmatrix zur Angabe einer Orientierung des Markers unter Verwendung des ermittelten Abstands und der Marker-Vektoren, wobei die Vorzeichen der Rotationsmatrix aus dem Grad der Nicht-Parallelität der jeweils zueinander im Wesentlichen parallelen Marker-Vektoren abgeleitet werden und ferner die Vereinfachung gilt, dass alle markanten Punkte des Markers den gleichen Abstand von der Aufnahmeeinheit aufweisen, kann eine Positionsbestimmung mit sehr wenigen Rechenoperationen und mit einer geringen Fehleranfälligkeit durchgeführt werden. Sie ist daher für mobile Endgeräte wie beispielsweise Telekommunikationsendgeräte mit ihren begrenzten Ressourcen besonders geeignet.

Vorzugsweise weist der Marker eine rechteckige und insbesondere eine quadratische Form auf, wobei die markanten Punkte des Markers seine Eckpunkte darstellen. Derartige markante Punkte können besonders einfach erfasst werden, wodurch die Ermittlung der zugehörigen Marker-Vektoren weiter vereinfacht wird.

Zur Realisierung der Vereinfachung eines gleichen Abstands aller Eckpunkte zur Aufnahmeeinheit werden die im Wesentlichen parallelen Marker-Vektoren zur Erzeugung von Durchschnitts-Marker-Vektoren arithmetisch gemittelt. Eine derartige Vereinfachung kann demzufolge ebenfalls mit sehr wenig Rechenschritten realisiert werden.

Insbesondere wird der Grad der Nicht-Parallelität der jeweils zueinander im Wesentlichen parallelen Marker-Vektoren aus der normierten Länge und der Richtung des Vektor-Kreuzprodukts der im Wesentlichen parallelen Marker-Vektoren berechnet, wodurch sich mit nur wenigen Rechenoperation auch das zur Auflösung der Rotationsmatrix noch fehlende Vorzeichen abschätzen lässt.

Genauer gesagt werden die noch unbestimmten Vorzeichen des Normalvektors, d.h. der dritten Spalte, der Rotationsmatrix aus dem Produkt des Grades der Nicht-Parallelität mit dem Durchschnitts-Marker-Vektor bestimmt. Die weiteren noch unbekannten Vorzeichen der Rotationsmatrix können dann auf der Grundlage der für eine orthonormale Matrix geltenden Beschränkungen bzw. Randbedingungen sehr einfach ermittelt werden.

In den weiteren Unteransprüchen sind weitere vorteilhafte Ausgestaltungen der Erfindung gekennzeichnet.

Die Erfindung wird nachstehend anhand eines Ausführungsbeispiels unter Bezugnahme auf die Zeichnung näher beschrieben.

Es zeigen:

Figur 1 eine vereinfachte Darstellung eines Markers, wie er im erfindungsgemäßen Verfahren verwendet wird;

Figur 2 eine vereinfachte Darstellung eines aufgenommenen Bildes mit aufgenommenem Marker zur Veranschaulichung der relevanten Marker-Vektoren; und

Figur 3 eine vereinfachte Darstellung eines aufgenommenen Bildes mit aufgenommenem Marker zur Veranschaulichung der erfindungsgemäßen Abschätzung der unbekannten Vorzeichen in der Rotationsmatrix.

Die Erfindung wird nachstehend unter Verwendung eines zweidimensionalen (2D) Markers sowie von dreidimensionalen (3D) Berechnungsvorschriften beschrieben, wobei zur Realisierung eines sehr einfachen und schnellen Verfahrens zur Positionsbestimmung, welches insbesondere für mobile Endgeräte wie beispielsweise Handys und PDAs geeignet ist, vereinfachende Annahmen gemacht werden. Hierbei werden die Gesamtgröße bzw. die Abmessungen des aufgenommenen Markers bzw. Abbild des Markers, die auf dem aufgenommenen Bild in Erscheinung tretenden Winkel des tatsächlich rechtwinkligen Markers sowie die Längenunterschiede der parallelen Seiten des aufgenommenen Markers verwendet. Die Erfindung verfolgt dabei die grundsätzliche Idee, ein System von Gleichungen aufzustellen, welches die möglichen Kamerapositionen bzw. Markerpositionen auf eine Kameraposition beschränkt, bei der man das resultierende Abbild des Markers erhält.

Die Begriffe Kameraposition oder Markerposition werden nacnfolgend äquivalent verwendet, da es sich im Wesentlichen um eine relative Positionierung der Aufnahmeeinheit bzw. Kamera zum verwendeten Marker handelt. Unter einer Position wird nachfolgend ein vorbestimmter Abstand sowie einer vorbestimmte Orientierung des Markers relativ zur Aufnahmeeinheit verstanden. Die zwei wesentlichen Annahmen der Erfindung sind hierbei, dass ein Durchschnittsabstand des Markers von der Aufnahmeeinheit für die Ermittlung bzw. Berechnungen verwendet wird und dass ferner die relativen Abmessungen von parallelen Seiten des Markers weiterhin zur Auflösung von Zweideutigkeiten insbesondere hinsichtlich des Vorz eichens der sich ergebenden Transformation bzw. Rotationsmatrix verwendet werden, wie nachfolgend im Einzelnen beschrieben werden soll.

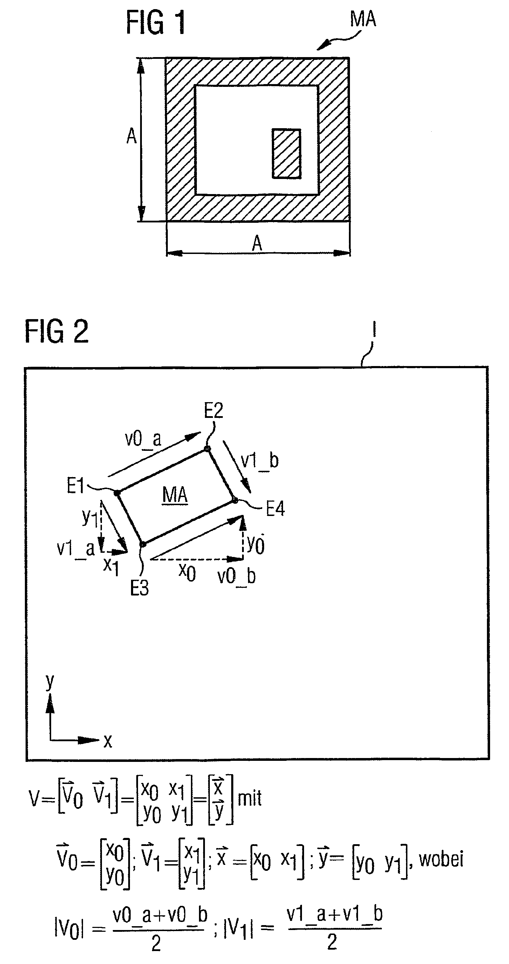

Figur 1 zeigt eine vereinfachte Darstellung eines Markers bzw. Zeichens, wie es beispielsweise für die vorliegende Erfindung verwendet wird. Derartige Marker sind speziell für das sogenannte "Tracking" angefertigt und besitzen eine besondere Form, die eine besonders einfache Erfassung sowohl des Markers insgesamt als auch seiner Position bzw. Lage und Orientierung ermöglichen.

Der in Figur 1 verwendete Marker MA weist eine rechteckige Form mit zueinander parallelen Seiten auf, wobei vorzugsweise eine quadratische Form mit einer gleichen Seitenlänge bzw. einer Abmessung A verwendet wird. Obwohl die rechteckige bzw. quadratische Form des Markers MA für die vorliegende Erfindung bereits vollkommen ausreichend ist, besitzt der Marker ferner in seinem Inneren einen weiteren flächigen Bereich, der beispielsweise zu einer Ecke hin versetzt ist. Derartige weitere Merkmale des Markers MA erleichtern beispielsweise ein Erfassen bzw. Erkennen des Markers innerhalb einer aufgenommenen Umwelt bzw. Umgebung. Die Daten dieses Markers MA werden als Referenzdaten in üblicher Weise vom Verfahren verwendet bzw. sind diesem vorbekannt.

Die Figur 2 zeigt eine vereinfachte Darstellung eines Bildes I der aufgenommenen Umwelt mit einem aufgenommenen Marker MA sowie zugehörigen Marker-Vektoren, wie sie vom vorliegenden Verfahren verwendet werden.

Bei dem in einem Augmented -Reality-System bzw. einem System mit "erweiterter Realität" verwendeten Verfahren zur Positionsbestimmung eines Markers werden grundsätzlich zwei Schritte durchgeführt, wobei als erstes der Marker MA innerhalb des Bildes I aufgefunden wird und anschließend die Positionsbestimmung des Markers MA relativ zur Aufnahmeeinheit bzw. Kamera erfolgt.

Da sich die vorliegende Erfindung lediglich auf die Postionsbestimmung des Markers MA bezieht, wird nachfolgend davon ausgegangen, dass der erste Schritt, nämlich das Auffinden des Markers MA innerhalb des Bildes I, bereits durchgeführt wurde und uns beispielsweise die markanten Punkte des Markers, welche beispielsweise seine Eckpunkte E1 bis E4 darstellen, bereits bekannt sind.

Ausgehend von diesen markanten Punkten bzw. den Eckpunkten E1 bis E4 des Markers MA werden nunmehr die zu einem jeweiligen markanten Punkt bzw. Eckpunkt korrespondierenden Marker-Vektoren bestimmt bzw. berechnet.

Gemäß Figur 2 ergeben sich daraus die Marker-Vektoren v0_a vom Eckpunkt E1 zum Eckpunkt E2, der Marker-Vektor v1_b vom Eckpunkt E2 zum Eckpunkt E4, der Marker-Vektor v1_a vom Eckpunkt E1 zum Eckpunkt E3 und der Marker-Vektor v0_b vom Eckpunkt E3 zum Eckpunkt E4. Ein jeweiliger Marker-Vektor setzt sich hierbei aus seinen x- und y-Komponenten zusammen, wobei beispielsweise der Marker-Vektor v1_a sich aus den Vektoren x1 und y1 zusammensetzt, während sich der Marker -Vektor v0_b aus den Vektoren x0 und y0 zusammensetzt.

Zur Realisierung der erfindungsgemäßen Vereinfachung, wonach alle markanten Punkte bzw. Eckpunkte E1 bis E4 einen gleichen Abstand zur Aufnahmeeinheit aufweisen, werden die im Wesentlichen parallelen Marker-Vektoren des abgebildeten Markers MA zur Erzeugung von Durchschnitts-Marker-Vektoren $V_0$ und $V_1$ zunächst gemittelt. Unter den "im Wesentlichen parallelen Marker-Vektoren" werden nachfolgend die den gegenüberliegenden Seiten des Markers MA zugeordneten Vektoren verstanden, die bei einer senkrechten Betrachtung des Markers exakt parallel verlaufen, jedoch bei einer Drehung bzw. einem Verkippen des Markers oder der Kamera zueinander in einem gewissen Winkel stehen können.

Durch die vorzugsweise arithmetische Mittelung der beiden sich gegenüber liegenden und im Wesentlichen parallelen Marker-Vektoren ergeben sich die Durchschnitts-Marker-Vektoren $V_0$ und $V_1$ mit der in der Figur 2 dargestellten Schreibweise, wodurch der abgebildete Marker MA auf der Anzeigeeinheit bzw. im Bild I vereinfacht als V = [V0 V1] festgelegt ist.

Die vorstehend beschriebene Vereinfachung bzw. Erzeugung der Durchschnitts-Marker-Vektoren kann mit sehr einfachen Schritten durchgeführt werden, weshalb nur eine geringe Rechenleistung erforderlich ist.

Ausgehend von dieser Vereinfachung wird nunmehr eine Gleichung aufgestellt, die das aufgenommene Bild V des Markers MA innerhalb des Bildes I beschreibt. Demzufolge gilt:

$$S \times C \times M = V$$

, wobei S einen Skalierungsfaktor darstellt, der mit einem Abstand d zwischen Marker $M_A$ und der Aufnahmeeinheit in Verbindung steht, einer Kamera- bzw. Marker-Orientierung C, die eine Drehung bzw. Neigung des Markers relativ zur Kamera wiedergibt, sowie einer Referenzposition M des Markers MA, der sich aus dem verwendeten Marker ergibt und bei einem zweidimensionalen Marker eine 2x3-Matrix darstellt.

Ausgeschrieben ergibt diese Gleichung:

$$\begin{bmatrix} d & 0 & 0 \\ 0 & d & 0 \end{bmatrix} \begin{bmatrix} e_{00} & e_{01} & e_{02} \\ e_{10} & e_{11} & e_{12} \\ e_{20} & e_{21} & e_{22} \end{bmatrix} \begin{bmatrix} 1 & 0 \\ 0 & 1 \\ 0 & 0 \end{bmatrix} = \begin{bmatrix} x_0 & x_1 \\ y_0 & y_1 \end{bmatrix}$$

mit $e_{00}$ bis $e_{22}$ als Werte der Transformationsmatrix C, wobei auf Grund der zweidimensionalen (2D) Darstellung des Markers MA auf dem Bild I für den Skalierungsfaktor S eine 2x3 -Matrix und für die Referenzposition M des Markers eine 3x2 -Matrix verwendet wird. Nach dem Ausmultiplizieren dieser Matrixgleichung für jeden Term erhält man eine Vielzahl von einfachen Gleichungen wie beispielsweise:

$$de_{00} = x_0$$

Unter Verwendung dieser einfachen Gleichungen können die Werte $e_{00}$, $e_{01}$, $e_{10}$ und $e_{11}$ aufgelöst werden und in die Matrix für die Kamera bzw. Marker-Transformation bzw. Orientierung C eingefügt werden, wodurch sich folgende Matrix ergibt:

$$\breve{C} = \begin{bmatrix} \dfrac{x_0}{d} & \dfrac{x_1}{d} & e_{02} \\ \dfrac{y_0}{d} & \dfrac{y_1}{d} & e_{12} \\ e_{20} & e_{21} & e_{22} \end{bmatrix}$$

Diese Kamera- bzw. Marker-Transformation bzw. Orientierung C stellt nunmehr eine reine Rotationsmatrix dar, was bedeutet, dass sie orthonormal ist. Dadurch ergeben sich eine Vielzahl von Beschränkungen bzw. Randbedingungen nämlich:

$$e_i \cdot e_i = 1$$

$$e_i \cdot e_j = 0 \quad \textit{iff} \quad i \neq j$$

$$e_i \times e_i = 0$$

$$e_i \times e_j = \pm e_k \quad \textit{iff} \quad i \neq j$$

Aus diesen Randbedingungen bzw. Beschränkungen kann nunmehr die vollständige Matrix C mit Ausnahme der Vorzeichen von einigen Einträgen berechnet bzw. bestimmt werden. So besitzt die Kamera- bzw. Marker-Transformation C nunmehr die Form:

$$\breve{C} = \begin{bmatrix} e_{0\_} \\ e_{1\_} \\ e_{2\_} \end{bmatrix} = \begin{bmatrix} \dfrac{x_0}{d} & \dfrac{x_1}{d} & \pm\sqrt{1 - \dfrac{\bar{X}^2}{d^2}} \\ \dfrac{y_0}{d} & \dfrac{y_1}{d} & \pm\sqrt{1 - \dfrac{\bar{Y}^2}{d^2}} \\ \pm\sqrt{1 - \dfrac{V_0^2}{d^2}} & \pm\sqrt{1 - \dfrac{V_1^2}{d^2}} & \dfrac{\bar{V}_0 \times \bar{V}_1}{d^2} \end{bmatrix}$$

mit $\dfrac{\bar{X}^2}{d^2} = (\dfrac{x_0}{d})^2 + (\dfrac{x_1}{d})^2$ und $\dfrac{\bar{Y}^2}{d^2} = (\dfrac{y_0}{d})^2 + (\dfrac{y_1}{d})^2$, wobei der Abstand d$^2$ gemäß nachfolgender Gleichung:

$$d^2 = ((V_0^2 + V_1^2) + ((V_0^2 + V_1^2)^2 - 4(\bar{V}_0 \times \bar{V}_1)^2)^{1/2}) / 2$$

berechnet wird.

Auch diese Berechnungsschritte benötigen einen vergleichsweise sehr geringen Rechenaufwand, weshalb das Verfahren eine geringe Rechenleistung benötigt und darüber hinaus sehr schnell durchgeführt werden kann.

Die letzte Spalte der Rotationsmatrix C, welche die Orientierung der Aufnahmeeinheit relativ zum Marker MA beschreibt, stellt den sogenannten Normalvektor des Markers MA dar, der durch den Abstand d geteilt ist. Insbesondere die Vorzeichen der Einträge dieses Normalvektors sind jedoch weiterhin unbekannt und müssen demzufolge aufgelöst werden. Für die Auflösung der Vorzeichen für die x- und y-Komponenten dieses Normalvektors wird daher das nachfolgende heuris tische Verfahren verwendet.

Dieses heuristische Verfahren nutzt die Tatsache aus, dass die der Aufnahmeeinheit näher liegenden Kanten des Markers MA länger sind als die von der Aufnahmeeinheit weiter entfernten Kanten des Markers MA. Dieses bedeutet fern er, dass die eigentlich parallelen Kanten bzw. Seiten des Markers MA beim abgebildeten Marker nicht so in Erscheinung treten und in Abhängigkeit von einer Verdrehung bzw. Kippung des Markers Abweichungen von der Parallelität aufweisen.

Zur möglichst allgemeinen Berücksichtigung dieser Gegebenheiten wird die folgende Strategie verfolgt. Der Grad einer Nicht-Parallelität wird unter Verwendung der normierten Länge und der Richtung (+/- z) des Vektor-Kreuzprodukts der beiden (theoretisch) parallelen Seiten bzw. Marker-Vektoren berechnet. Dieser ermittelte Grad der Nicht-Parallelität wird anschließend mit dem Durchschnitts-Marker-Vektor der beiden im Wesentlichen parallelen Marker-Vektoren multipliziert, wodurch sich ein zum Normalvektor in dieser Richtung propo rtionales Ergebnis ergibt. Diese Berechnung wird für beide Paare von im Wesentlichen parallelen Marker-Vektoren durchgeführt und daraus eine Summe gebildet. Die größte, d.h. signifikanteste, Komponente (x oder y) wird dann zum Festlegen der unbekannten Vorzeichen für den Normalvektor bzw. die dritte Spalte der Rotationsmatrix C verwendet. Genauer gesagt bedeutet dieses, wenn das Ergebnis eine große positive x -Komponente und eine kleine negative y-Komponente aufweist, so würde das Vorzeichen der x-Komponente des Normalvektors als positiv festgelegt werden.

Wiederum unter Verwendung der vorstehenden Beschränkungen bzw. Randbedingungen, die für eine orthonormale Matrix gelten, lassen sich nunmehr auch die übrigen unbekannten Vorzeichen (in der ersten und zweiten Spalte) einfach ermitteln bzw. berechnen.

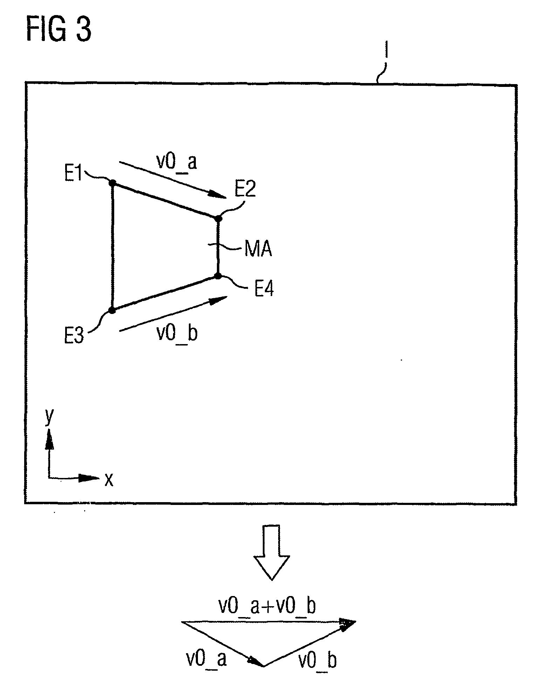

Figur 3 zeigt eine vereinfachte Darstellung eines Bildes I mit aufgenommenem Marker MA zur Veranschaulichung des vorstehend beschriebenen heuristischen Verfahrens, wobei zunächst die im Wesentlichen parallelen Marker-Vektoren v0_a und v0_b miteinander addiert werden, um daraus einen Durchschnitts-Marker-Vektor V0 zu ermitteln. Dieser Wert wird ferner mit dem Vektor-Kreuzprodukt der beiden im Wesentlichen parallelen Marker-Vektoren v0_a und v0_b multipliziert und in gleicher Weise das Verfahren für die nicht dargestellten weiteren i. W. parallelen Marker-Vektoren durchgeführt. Ausgehend von diesem Summenergebnis wird unter Verwendung der signifikantesten Komponente x oder y das Vorzeichen der x - und y-Komponente in der dritten Spalte der orthonormalen Matrix festgelegt bzw. abgeschätzt.

Auf diese Weise erhält man ein außerordentlich effizientes Verfahren zur Positionsbestimmung von Markern. Genauer gesagt kann die Geschwindigkeit um einen Faktor größer 1000 verbessert werden, da insbesondere die Berechnungsdauer auf einige wenige arithmetische Operationen pro Marker bzw. Marker-Vektoren beschränkt und insbesondere unabhängig von der Bildgröße oder der Größe des abgebildeten Markers ist. Auf diese Weise können Positionsänderungen von Markern relativ zu einer Kamera in einem Augmented-Reality-System erstmalig auch mit mobilen Endgeräten unter Echtzeitbedingungen durchgeführt werden, welche üblicherweise nur geringe Ressourcen und insbesondere eine geringe Rechenleistung aufweisen. Insbesondere bei zukünftigen Telekommunikationsendgeräten wie z.B. Handys können demzufolge erstmalig Verfahren zur Realisierung einer erweiterten Realität bzw. von Augmented Reality realisiert werden.

Da das vorliegende Verfahren im Wesentlichen nur auf leicht zu erkennenden markanten Punkten des Markers MA basiert, ist neben der geringen Rechenleistung bzw. der außerordentlich hohen Geschwindigkeit darüber hinaus eine außerordentlich hohe Störsicherheit festzustellen, die einen besonders robusten Betrieb ermöglicht.

Die Erfindung wurde vorstehend anhand eines rechteckförmigen bzw. quadratischen Markers beschrieben. Sie ist jedoch nicht darauf beschränkt und kann in gleicher Weise auch auf anders geformte Marker, insbesondere dreidimensionale Marker angewendet werden.

**Patentansprüche**

**1.** Verfahren zur Bestimmung einer Position eines Markers in einem Augmented-Reality-System mit den Schritten:

a) Erfassen von markanten Punkten (E1 bis E4) eines Markers (MA) in einem aufgenommenen Bild (I);
b) Ermitteln von Marker-Vektoren (v0_a, v0_b, v1_a, v1_b) aus den markanten Punkten des Markers (MA);
c) Ermitteln eines Abstands des Markers (MA) von einer Aufnahmeeinheit unter Verwendung der Marker-Vektoren (v0_a, v0_b, v1_a, v1_b); und
d) Ermitteln einer Rotationsmatrix zur Angabe einer Orientierung des Markers (MA) relativ zur Aufnahmeeinheit unter Verwendung des ermittelten Abstands und der Marker-Vektoren,

**dadurch gekennzeichnet, dass**
die Vorzeichen der Rotationsmatrix aus dem Grad der Nicht-Parallelität der jeweils zueinander im Wesentlichen parallelen Marker-Vektoren, d.h. die den gegenüberliegenden Seiten des Markers (MA) zugeordneten Vektoren, die bei einer senkrechten Betrachtung des Markers exakt parallel verlaufen, jedoch bei einer Drehung bzw. einem Verkippen des Markers oder der Kamera zueinander in einem gewissen Winkel stehen können, abgeleitet werden, und
die Vereinfachung gilt, dass alle markanten Punkte (E1 bis E4) des Markers (MA) den gleichen Abstand von der Aufnahmeeinheit aufweisen.

**2.** Verfahren nach Patentanspruch 1,
**dadurch gekennzeichnet, dass** der Marker (MA) rechteckförmig ausgebildet ist und die markanten Punkte des Markers seine Eckpunkte (E1 bis E4) darstellen.

**3.** Verfahren nach Patentanspruch 1 oder 2,
**dadurch gekennzeichnet, dass** zur Realisierung der Vereinfachung eines gleichen Abstands aller markanten Punkte (E1 bis E4) zur Aufnahmeeinheit die im Wesentlichen parallelen Marker-Vektoren (v0_a, v0_b, v1_a, v1_b) zur Erzeugung von Durchschnitts-Marker-Vektoren ($V_0$, $V_1$) gemittelt werden.

**4.** Verfahren nach Patentanspruch 3,
**dadurch gekennzeichnet, dass** der Abstand des Markers (MA) von der Aufnahmeeinheit die Gleichung

$$d = (((V_0^2 + V_1^2) + ((V_0^2 + V_1^2)^2 - 4(\vec{V}_0 \times \vec{V}_1)^2)^{1/2}) / 2)^{1/2}$$

erfüllt, wobei $V_0$ und $V_1$ die Durchschnitts-Marker-Vektoren des Markers (MA) darstellen.

**5.** Verfahren nach einem der Patentansprüche 3 oder 4,
**dadurch gekennzeichnet, dass** die Rotationsmatrix zur Angabe der Orientierung des Markers (MA) die Form aufweist:

$$\check{C} = \begin{bmatrix} \dfrac{x_0}{d} & \dfrac{x_1}{d} & \pm\sqrt{1-\dfrac{\bar{X}^2}{d^2}} \\[2ex] \dfrac{y_0}{d} & \dfrac{y_1}{d} & \pm\sqrt{1-\dfrac{\bar{Y}^2}{d^2}} \\[2ex] \pm\sqrt{1-\dfrac{V_0^2}{d^2}} & \pm\sqrt{1-\dfrac{V_1^2}{d^2}} & \dfrac{\vec{V}_0 \times \vec{V}_1}{d^2} \end{bmatrix}$$

$$\frac{\bar{X}^2}{d^2} \;=\; \left(\frac{x_0}{d}\right)^2 \;+\; \left(\frac{x_1}{d}\right)^2 \text{ mit und } \frac{Y^2}{d^2} \;=\; \left(\frac{y_0}{d}\right)^2 \;+\; \left(\frac{y_1}{d}\right)^2, \text{ wobei}$$

$V_0$, $V_1$ die Durchschnitts-Marker-Vektoren

d den Abstand des Markers zur Aufnahmeeinheit und

$x_0$, $x_1$, $y_0$, $y_1$ die x- oder y-Komponenten der Durchschnitts-Marker-Vektoren darstellen.

**6.** Verfahren nach einem der Patentansprüche 1 bis 5,
**dadurch gekennzeichnet, dass** der Grad der Nicht-Parallelität aus der normierten Länge und der Richtung des Vektor-Kreuzprodukts der im Wesentlichen parallelen Marker-Vektoren berechnet wird.

**7.** Verfahren nach Patentanspruch 6,
**dadurch gekennzeichnet, dass** die Vorzeichen des Normalvektors der Rotationsmatrix aus dem Produkt des Grades der Nicht-Parallelität mit dem Durchschnitts-Marker-Vektor bestimmt werden.

**8.** Verfahren nach Patentanspruch 7,
**dadurch gekennzeichnet, dass** die weiteren Vorzeichen der Rotationsmatrix auf der Grundlage der für eine orthonormale Matrix geltenden Beschränkung ermittelt werden.

**9.** Verfahren nach einem der Patentansprüche 1 bis 8,
**dadurch gekennzeichnet, dass** es in einem mobilen Endgerät, insbesondere einem Telekommunikationsendgerät, durchgeführt wird.

**Claims**

**1.** Method for determining a position of a marker in an augmented reality system with the steps:

   a) Capturing marking points (E1 to E4) of a marker (MA) in a recorded image (I);
   b) Determining marker vectors (v0_a, v0_b, v1_a, v1_b) from the marking points of the marker (MA);
   c) Determining a distance from the marker (MA) to a recording unit using the marker vectors (v0_a, v0_b, v1_a, v1_b); and
   d) Determining a rotation matrix for specifying an orientation of the marker (MA) relative to the recording unit using the distance determined and the marker vectors,

   **characterised in that**
   the leading sign of the rotation matrix is derived from the degree of non-parallelism of the marker vectors which are substantially in parallel to one another, i.e. the vectors assigned to the opposite sides of the marker (MA), which run exactly in parallel when the marker is observed at right angles, however, for a rotation or tipping of the marker or the camera, can be at a certain angle to each other, and
   the simplification applies that all marking points (E1 to E4) of the marker (MA) are at the same distance from the recording unit.

**2.** Method in accordance with claim 1,
**characterised in that** the marker (MA) is embodied in a rectangular shape and the marking points of the marker represent its corner points (E1 to E4).

**3.** Method in accordance with claim 1 or 2,
**characterised in that**, for implementing the simplification of an equal distance of all marking points (E1 to E4) to the recording unit, the substantially parallel marker vectors (v0_a, v0_b, v1_a, v1_b) are averaged to generate average marker vectors ($V_0$ and $V_1$).

**4.** Method in accordance with claim 3,
**characterised in that** the distance of the marker (MA) from the recording unit satisfies the equation

$$d = (((V_0^2 + V_1^2) + ((V_0^2 + V_1^2)^2 - 4(\vec{V}_0 \times \vec{V}_1)^2)^{1/2}) / 2)^{1/2},$$

with $V_0$ and $V_1$ representing the average marker vectors of the marker (MA).

5. Method in accordance with one of claims 3 or 4,

   **characterised in that** the rotation matrix has the following form for specifying the orientation of the marker (MA) :

$$\breve{C} = \begin{bmatrix} \dfrac{x_0}{d} & \dfrac{x_1}{d} & \pm\sqrt{1 - \dfrac{\vec{X}^2}{d^2}} \\ \dfrac{y_0}{d} & \dfrac{y_1}{d} & \pm\sqrt{1 - \dfrac{\vec{Y}^2}{d^2}} \\ \pm\sqrt{1 - \dfrac{V_0^2}{d^2}} & \pm\sqrt{1 - \dfrac{V_1^2}{d^2}} & \dfrac{\vec{V}_0 \times \vec{V}_1}{d^2} \end{bmatrix}$$

with $\dfrac{\vec{X}^2}{d^2} = (\dfrac{x_0}{d})^2 + (\dfrac{x_1}{d}$ and $\dfrac{Y^2}{d^2} = (\dfrac{y_0}{d})^2 + (\dfrac{y_1}{d})^2$, wherein

$V_0$, $V_1$ are the average marker vectors

d is the distance from the marker to the recording unit and

$x_0$, $x_1$, $y_0$, $y_1$ represent the x or y components of the average marker vectors.

6. Method in accordance with one of claims 1 to 5,
   **characterised in that** the degree of non-parallelism is calculated from the standardised length and the direction of the vector cross product of the substantially parallel marker vectors.

7. Method in accordance with claim 6,
   **characterised in that** the leading signs of the normal vector of the rotation matrix are determined from the product of the degree of non-parallelism with the average marker vector.

8. Method in accordance with claim 7,
   **characterised in that** the further leading signs of the rotation matrix are determined on the basis of the restriction applicable for an orthonormal matrix.

9. Method in accordance with one of the claims 1 to 8;
   **characterised in that** it is executed in a mobile terminal, especially a telecommunications terminal.


**Revendications**

1. Procédé de détermination d'une position d'un marqueur dans un système de réalité augmentée comprenant les stades de :

   a) relevé de deux points (E1 à E4) marquants d'un marqueur ( MA ) dans une image ( I ) enregistrée ;
   b) détermination de vecteurs ( v0_a, v0_b, v1_a, v1_b ) de marqueur à partir des points marquants du marqueur ( MA ) ;
   c) détermination d'une distance du marqueur ( MA ) à une unité d'enregistrement en utilisant les vecteurs ( v0_a, v0_b, v1_a, v1_b ) du marqueur ; et

EP 1 741 059 B1

d) détermination d'une matrice de rotation pour l'indication d'une orientation du marqueur ( MA ) par rapport à l'unité d'enregistrement en utilisant la distance déterminée et les vecteurs du marqueur,

**caractérisé en ce que**
on déduit les signes de la matrice de rotation du degré de non-parallélisme des vecteurs du marqueur sensiblement parallèles entre eux, c'est-à-dire les vecteurs qui sont associés au côté opposé du marqueur et qui s'étendent exactement parallèlement lorsque l'on considère verticalement le marqueur, mais qui, lors d'une rotation ou d'un basculement du marqueur ou de la caméra l'un par rapport à l'autre, peuvent se trouver suivant un certain angle et on a la simplification que tous les points ( E1 à E4 ) marquants du marqueur ( MA ) sont à la même distance de l'unité d'enregistrement.

2. Procédé suivant la revendication 1,
   **caractérisé en ce que** le marqueur ( MA ) est rectangulaire et les points marquants du marqueur représentent ses sommets ( E1 à E4 ).

3. Procédé suivant l'une des revendications 1 ou 2,
   **caractérisé en ce que**, pour la réalisation de la simplification d'une même distance de tous les points ( E1 à E4 ) marquants à l'unité d'enregistrement, on fait la moyenne des vecteurs ( v0_a, v0_b, v1_a, v1_b ) de marqueur sensiblement parallèles pour la production de vecteurs ( $V_0$, $V_1$ ) de marqueur moyens.

4. Procédé suivant la revendication 3,
   **caractérisé en ce que** la distance du marqueur ( MA ) à l'unité d'enregistrement satisfait l'équation

$$d = (((V_0^2 + V_1^2) + ((V_0^2 + V_1^2)^2 - 4(\vec{V}_0 \times \vec{V}_1)^2)^{1/2}) / 2)^{1/2}$$

dans laquelle $V_0$ et $V_1$ représentent les vecteurs de marqueur moyens du marqueur ( MA ).

5. Procédé suivant l'une des revendications 3 ou 4,
   **caractérisé en ce que** la matrice de rotation, pour la l'indication de l'orientation du marqueur ( MA ), a la forme :

$$\check{C} = \begin{bmatrix} \dfrac{x_0}{d} & \dfrac{x_1}{d} & \pm\sqrt{1-\dfrac{\bar{X}^2}{d^2}} \\ \dfrac{y_0}{d} & \dfrac{y_1}{d} & \pm\sqrt{1-\dfrac{\bar{Y}^2}{d^2}} \\ \pm\sqrt{1-\dfrac{V_0^2}{d^2}} & \pm\sqrt{1-\dfrac{V_1^2}{d^2}} & \dfrac{\vec{V}_0 \times \vec{V}_1}{d^2} \end{bmatrix}$$

avec $\dfrac{\bar{X}^2}{d^2} = (\dfrac{x_0}{d})^2 + (\dfrac{x_1}{d})^2$ et $\dfrac{Y^2}{d^2} = (\dfrac{y_0}{d})^2 + (\dfrac{y_1}{d})^2$ dans laquelle

$V_0$, $V_1$ représentent les vecteurs de marqueur moyens,
d représente les distances du marqueur à l'unité d'enregistrement et
$x_0$, $x_1$, $y_0$, $y_1$ représentent les composantes x ou y des vecteurs de marqueur moyens.

6. Procédé suivant l'une des revendications 1 à 5,
   **caractérisé en ce que** l'on calcule le degré de non-parallélisme à partir de la longueur normée et de la direction du produit vectoriel croisé des vecteurs de marqueur sensiblement parallèles.

7. Procédé suivant la revendication 6,
   **caractérisé en ce que** l'on détermine le signe du vecteur normal de la matrice de rotation à partir du produit du degré de non-parallélisme par le vecteur de marqueur moyen.

8. Procédé suivant la revendication 7,
   **caractérisé en ce que** l'on détermine les autres signes de la matrice de rotation sur la base de la limitation valant pour une matrice orthonormale.

9. Procédé suivant l'une des revendications 1 à 8,
   **caractérisé en ce qu'**on l'effectue dans un terminal mobile, notamment dans un terminal de télécommunication.

## FIG 1

MA

A

A

## FIG 2

MA

E2

E1

E3

E4

v0_a

v1_b

v1_a

v0_b

y1

x1

x0

y0

y

x

$$V = \begin{bmatrix} \vec{V}_0 & \vec{V}_1 \end{bmatrix} = \begin{bmatrix} x_0 & x_1 \\ y_0 & y_1 \end{bmatrix} = \begin{bmatrix} \vec{x} \\ \vec{y} \end{bmatrix} \text{ mit}$$

$$\vec{V}_0 = \begin{bmatrix} x_0 \\ y_0 \end{bmatrix} ; \vec{V}_1 = \begin{bmatrix} x_1 \\ y_1 \end{bmatrix} ; \vec{x} = \begin{bmatrix} x_0 & x_1 \end{bmatrix} ; \vec{y} = \begin{bmatrix} y_0 & y_1 \end{bmatrix}, \text{ wobei}$$

$$|V_0| = \frac{v0\_a + v0\_b}{2} ; |V_1| = \frac{v1\_a + v1\_b}{2}$$

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **S. MALIK et al.** Robust 2D Tracking for Real Time Augmented Reality. *Procedures of Vision Interface,* 2002
- **J. REKIMOTO.** Matrix: Real Time Object Identification and Registration Method for Augmented Reality. *Procedures of Vision Interface,* Juli 1998
- **A. ANSAR et al.** Linear Solutions for Visual Augmented Reality Registration. *IEEE Symposium for Augmented Reality,* 2001
- Matrix: A Real Time Object Identification and Registration Method for Augmented Reality. **J. REKIMOTO.** Computer Human Interaction. IEEE Comput. Soc, 15. Juli 1998, 63-68